Europäisches Patentamt

European Patent Office

Office européen des brevets

(11) Numéro de publication: **0 136 211**
**A2**

# (12) DEMANDE DE BREVET EUROPEEN

(21) Numéro de dépôt: **84401623.8**

(22) Date de dépôt: **03.08.84**

(51) Int. Cl.⁴: **E 05 D 11/00**

(30) Priorité: **04.08.83 FR 8313061**
**28.11.83 FR 8319177**

(43) Date de publication de la demande: **03.04.85**
**Bulletin 85/14**

(84) Etats contractants désignés: **AT BE CH DE FR GB IT LI LU NL SE**

(71) Demandeur: **Begouen, Jean-Paul, Lombost Archignat, F-03380 Huriel (FR)**

(72) Inventeur: **Begouen, Jean-Paul, Lombost Archignat, F-03380 Huriel (FR)**

(74) Mandataire: **Chanet, Jacques, B.P. 27 95bis avenue de Royat, F-63400 Chamalières (FR)**

(54) **Rondelles antifriction pour charnières d'ouvrants et dispositif de pose de celles-ci.**

(57) La présente invention est du domaine des huisseries.

Selon l'invention une rondelle de gond est caractérisée en ce qu'elle est constituée par une couronne 5 cylindrique ouverte en matière plastique telle que polycarbonate et un dispositif destiné à la pose comprend une partie dite pince 20 de forme aplatie allongée et amincie à son extrémité, et une partie 22 dite pédale-levier formant avec ladite pince un dièdre.

Application au remplacement des rondelles aux gonds des ouvrants, portes ou fenêtres par exemple.

La présente invention est du domaine de l'équipement des huisseries et elle a plus précisément pour objet une rondelle antifriction destinée aux gonds équipant les ouvrants de celles-ci.

On rappelle que de telles rondelles, en bronze par exemple, sont disposées autour d'un gond entre les deux paumelles servant de charnière à un ouvrant de porte ou de fenêtre par exemple, afin d'éviter l'usure des paumelles ou encore éviter les grincements résultant de la friction d'une paumelle sur l'autre ; on rappelle aussi que ces rondelles sont des pièces d'usure qu'il convient de changer de temps à autre. Pour éviter d'avoir à sortir les paumelles de leur gond, on a proposé, notamment par un brevet français 2 506 375, de constituer une rondelle antifriction par deux pièces de forme générale semi-circulaire emboitables l'une dans l'autre au moyen de petits reliefs mâle et femelle de chacune des deux pièces. Un inconvénient de la rondelle proposée par cette demande de brevet réside dans la forme relativement complexe des pièces de la rondelle, complexité exigeant une grande précision de façonnage et ayant pour résultat un coût relativement élevé de ces rondelles.

Le but de la présente invention est de proposer une rondelle antifriction de grande facilité de façonnage donc de coût très modique, ainsi qu'un dispositif facilitant la mise en place d'une telle rondelle notamment.

Selon la présente invention une pièce antifriction dite rondelle de gond est caractérisée d'une manière générale en ce qu'elle est constituée par une couronne cylindrique ouverte, l'ouverture ayant une largeur minimale au voisinage de l'évidement central de la couronne, ladite largeur minimale étant légèrement inférieure au diamètre du gond autour duquel la rondelle est destinée à être placée, et en ce qu'au moins les bords de l'ouverture centrale sont arrondis.

Il résulte de cette conformation de rondelle qu'elle peut être introduite en force, à l'aide d'un marteau par exemple, autour du gond en jouant sur l'élasticité du métal qui la constitue, il en résulte aussi que, grâce aux bords arrondis de l'ouverture, elle ne présentera pas le risque de sortir spontanément de la charnière.

Suivant une forme préférée de réalisation les bords intérieurs et extérieurs de l'ouverture sont arrondis tandis que ses parois courbes en regard l'une de l'autre ont des génératrices parallèles.

Toujours selon cette forme préférée de réalisation, le diamètre (d1) de l'évidement intérieur étant choisi supérieur de quelques dixièmes de millimètres au diamètre (d2) du gond, la largeur (l) de l'ouverture est inférieure de cinq dixièmes de millimètre au diamètre (d2) du gond, l'épaisseur (e) de la rondelle étant d'environ deux millimètres.

Le but des présents perfectionnements est de proposer une rondelle unique convenant pour une pluralité de diamètres de gonds comprenant les dimensions les plus courantes.

Selon ces perfectionnementsune rondelle antifriction pour charnière d'ouvrant, dite rondelle de gond,est caractérisée d'une manière générale en ce qu'elle est formée par une couronne ouverte, l'ouverture ayant une largeur minimale, ladite largeur minimale étant légèrement inférieure au diamètre du gond autour duquel la rondelle est destinée à être placée, et en ce que ladite couronne est constituée d'une matière plastique à caractéristiques mécaniquesélevées.

Il résulte de cette conformation d'une rondelle qu'elle peut être introduite en force, à l'aide d'un marteau par exemple, autour du gond en jouant sur l'élasticité de la matière qui la constitue ; il en résulte aussi que grâce à l'élasticité d'une matière plastique telle que le nylon ou le polycarbonate la rondelle peut s'adapter à des diamètres de gond allant de 5,5 à 7 millimètres.

De façon surprenante les essais d'endurance de telles rondelles ont montré qu'elles étaient susceptibles de supporter jusqu'à 5.000 manoeuvres d'ouverture et de fermeture d'un ouvrant, ce qui dans des conditions habituelles d'utilisation représente une durée de plusieurs années.

De préférence la matière constitutive des rondelles conformes à l'invention est l'une des matières plastiques du groupe de matières plastiques constitué par les polyamides, les polycarbonates, les polyacétals, et d'une manière générale de toute matière plastique ayant des caractéristiques, dureté, résiliance, élasticité, élevées.

La présente invention a encore pour objet un dispositif destiné à faciliter la pose d'une rondelle tel que défini ci-dessus en permettant un léger soulèvement de la porte lors de la mise en place de la rondelle.

Suivant une caractéristique générale, un tel dispositif comprend une partie dite pince de forme aplatie allongée, et amincie à son extrémité, et une partie dite pédale-levier formant avec ladite pince un dièdre, l'arête du dièdre constituant le point d'appui d'un levier dont la pédale, suivant le sens de sa longueur, constitue le grand bras, et la pince, suivant sa largeur, constitue le petit bras.

De préférence le dispositif comporte une troisième partie, dite pédale de rappel prolongeant sensiblement à angle droit la pédale-levier, ladite pédale de rappel ayant une longueur comprise entre le tiers et le quart de la longueur de la pédale-levier.

De préférence l'angle $\alpha$ de dièdre formé par le plan de la pince et par le plan passant par l'arête par l'extrémité de la pédale-levier est inférieur d'environ 5 à 10° à l'angle droit.

La présente invention sera mieux comprise et des détails en relevant apparaîtront à la description qui va être faite de formes particulières de réalisation tant de la rondelle que du dispositif en facilitant la pose, en relation avec les figures des planches annexées dans lesquelles :

La fig. 1 illustre une charnière, de porte par exemple, dans laquelle va être introduite une rondelle de l'invention,

La fig. 2 est une représentation agrandie en perspective d'une rondelle conforme à l'invention,

Les fig. 3, 4 et 5 sont respectivement des vues en plan, en coupe et de côté de la même,

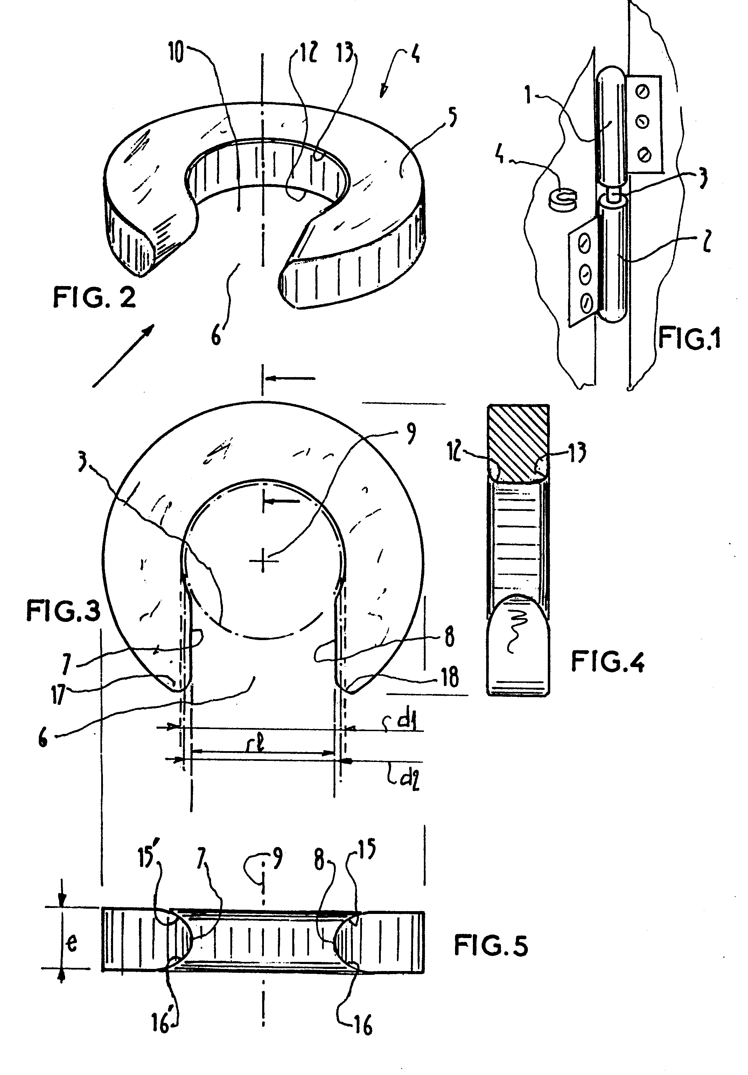

- La fig.1 est une représentation en plan, à grande échelle, environ 5 à 6, d'une telle rondelle en matiere plastique.

- La fig.2 est une vue de profil de la même.

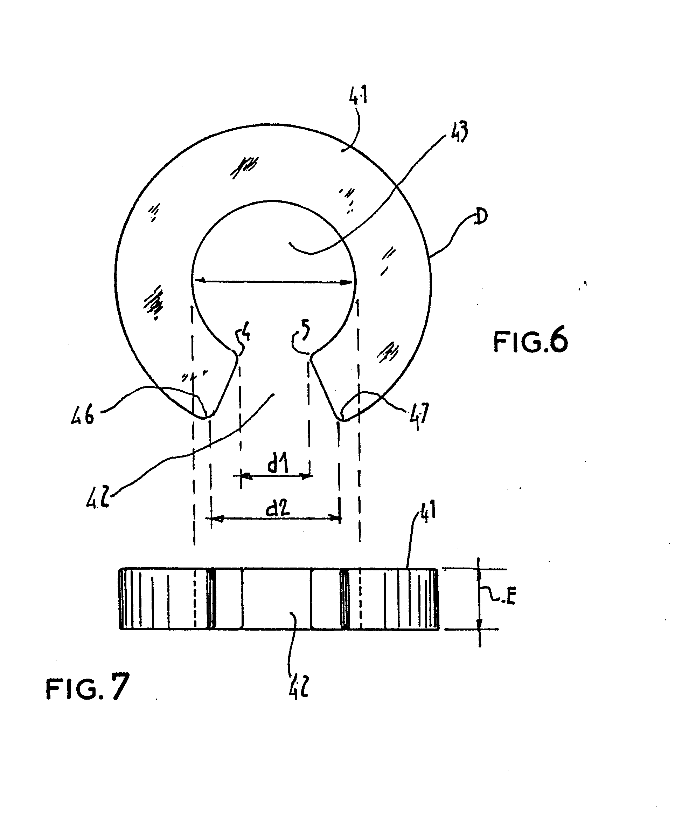

La fig. 6 est une représentation en perspective sensiblement à l'échelle d'un dispositif destiné à faciliter la pose d'une rondelle des figures précédentes,

La fig. 7 est une représentation de côté du même et,

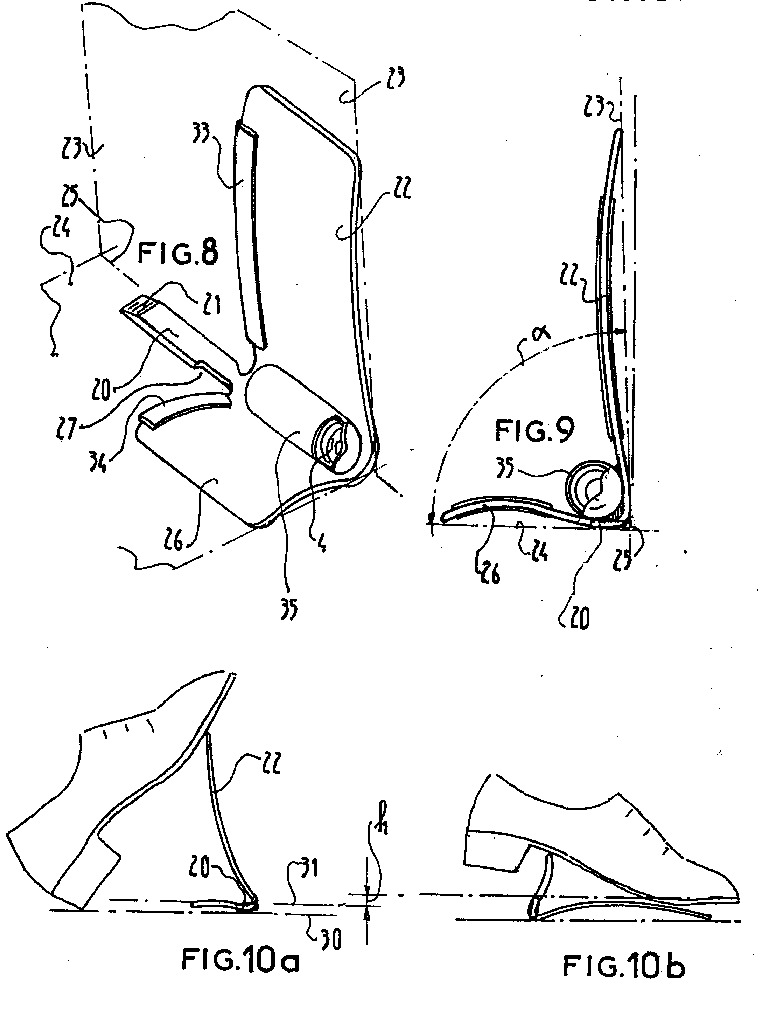

Les fig. 8a et 8b illustrent un mode d'utilisation du dispositif des figures précédentes dans le soulèvement d'une porte.

Sur la fig. 1 une charnière telle deux portes est constituée par un couple de paumelles 1 et 2 articulées par le moyen d'un gond 3 ; une rondelle 4 du type relevant de l'invention est destinée à être insérée autour du gond entre les paumelles convenablement écartées l'une de l'autre par relèvement de l'ouvrant.

Sur la fig. 2 une rondelle 4 de la figure précédente, représentée à beaucoup plus grande échelle est constituée par une couronne cylindrique 5 ouverte en 6.

Sur les fig. 3, 4 et 5 il apparaît que l'ouverture 6 est limitée par des parois courbes pratiquement hémi-cylindriques 7 et 8 dont les génératrices de l'une sont parallèles à celles de l'autre, et orthogonales à l'axe 9 de l'évidement 10 de la rondelle. Il apparaît sur la fig. 3 que l'évidement 10 est occupé par le gond 3 figuré en trait mixte ; il apparaît aussi que le diamètre $d1$ de l'évidement est légèrement supérieur au diamètre $d2$ du gond, lui-même légèrement supérieur à la largeur $1$ de l'ouverture.

Il apparaît aussi sur l'ensemble de ces figures que les bords 12 et 13 de l'évidement central sont arrondis suivant un rayon de quelques dixièmes de millimètre (cela est particulèrement visible sur la partie coupée de la fig. 4 ; les bords arrondis 15, 16 et 15' et 16' des parois, respectivement 8 et 7 de l'ouverture sont à l'origine de la stabilité de la rondelle entre les paumelles. Les bords extérieurs 17 et 18 de l'ouverture sont eux aussi arrondis ; l'arrondi des bords extérieurs facilite l'insertion de la rondelle autour du gond.

Sur les fig. 6 et 7 une rondelle en plastique est formée par une couronne 41 ouverte en 42, l'ouverture 42 ayant une largeur minimale inférieure au diamètre d'un gond, par exemple inférieure à 5,5 millimètres ; l'évidemment intérieur 43 de la rondelle a un diamètre de 6 millimètres ; les bords intérieurs 44 et 45 de l'ouverture 42 sont éloignés l'un de l'autre d'une distance d1 comprise entre 3 et 5 millimètres, par exemple 4 millimètres ; les bords extérieurs 46 et 47 de l'ouverture sont éloignés l'un de l'autre d'une distance d2 comprise entre 6 et 9 millimètres, par exemple 7 millimètres.

Le diamètre extérieur D de la rondelle, pour une rondelle correspondant aux dimensions sus-décrites sera d'environ 12 millimètres tandis que son épaisseur E sera d'environ 1,5 millimètres.

Sur les fig. 8 et 9 un dispositif destiné à relever un ouvrant, notamment un ouvrant de porte, comprend une partie 20 de forme aplatie allongée, et amincie à son extrémité 21, cette partie étant dite pince : il comprend aussi une partie 22 dite pédale-levier dont le plan 23 forme avec le plan 24 de la pince un dièdre dont l'arête 25 constitue le point d'appui du levier, la pince dans sa largeur en constituant le petit bras et la pédale-levier dans sa longueur en constituant le grand bras. Une réduction 27 de la largeur de la pince 20, sur le bord de celle-ci destiné à être en contact avec l'ouvrant, évite de détériorer le bord de la face de l'ouvrant pour la même raison les bords de la pince sont légèrement arrondis.

Le dispositif comprend une troisième partie dite pédale de rappel 26.

Il apparaît sur la fig. 9 que l'angle formé par le plan 24 (plan de la pince et de la pédale de rappel) et par le plan passant par l'arête 25 et l'extrémité de la pédale-levier est inférieur d'environ 5 à 10° à l'angle droit ; cette disposition est destinée à donner la stabilité à la position de relèvement de l'ouvrant lorsque le dispositif est utilisé.

Sur les fig. 10 a et 10 b illustrant le fonctionnement du dispositif de l'invention il apparaît que, la pince 20 ayant été introduite entre le sol 30 et le bord inférieur d'un ouvrant 31 (fig. 10a) un mouvement d'appui, avec le pied par exemple, provoque le basculement du dispositif (fig. 10b) ; l'ouvrant est alors remonté, par translation le long de ses gonds d'une hauteur h égale à la différence entre la largeur et l'épaisseur de la pince 20 ; cette différence est suffisante pour permettre l'introduction des rondelles entre les paumelles des charnières de l'ouvrant.

Revenant aux fig. 8 et 9 il apparaît que l'on a pourvu le bord des pédales situées du côté de la pince de bourrelets 33 et 34, en matière plastique ou élastique par exemple, ces bourrelets étant destinés à éviter que le frottement des bords du dispositif ne raye le bas des huisseries. Toujours sur ces figures on peut voir que l'on a prévu à l'intérieur de l'angle formé par les pédales une réserve 35 de rondelles, constituée par un chargeur cylindrique ouvert à son extrémité et incorporant un ressort poussant les rondelles vers l'ouverture ; on peut ainsi les retirer radialement une à une au fur et à mesure des besoins.

Avantageusement l'ensemble des rondelles et du dispositif est présenté aux utilisateurs dans un unique emballage transparent.

Bien que l'on ait décrit et représenté des formes particulières et préférées de réalisations de l'invention tant en ce qui concerne les rondelles que les dispositifs de pose, il doit être compris que la portée de celle - ci n'est pas limitée à ces formes mais qu'elle s'étend à toute rondelle ou dispositif de pose comportant les caractéristiques générales énoncées plus haut.

R E V E N D I C A T I O N S

1.- Pièce antifriction, dite rondelle de gond, caractérisée :
en ce qu'elle est constituée par une couronne (5) cylindrique ouverte, l'ouverture (6) ayant une largeur minimale ($\ell$) au voisinage de l'évidement central (10) de la couronne, ladite largeur minimale étant légèrement inférieure au diamètre du gond autour duquel la rondelle est destinée à être placée, et

2.- Rondelle selon la revendication 1, caractérisée :
en ce qu'au moins les bords extérieurs (17,18) de l'ouverture sont arrondis.

3.- Rondelle selon la revendication 1, caractérisée :
en ce que, les parois (7,8) de l'ouverture étant sensiblement hémi-cylindriques, les génératrices de l'une sont parallèles aux génératrices de l'autre.

4.- Rondelle selon la revendication 3, caractérisée :
en ce que, le diamètre (d1) de l'évidement intérieur étant choisi supérieur de quelques dixièmes de millimètres au diamètre (d2) du gond, la largeur (1) de l'ouverture est inférieure de cinq dixièmes de millimètres au diamètre (d2) du gond, l'épaisseur (e) de la rondelle étant d'environ deux millimètres.

5.- Dispositif destiné à la pose d'une rondelle conforme à l'une quelconque des revendications précédentes, caractérisé :
en ce qu'il comprend une partie dite pince (20) de forme aplatie allongée, et amincie à son extrémité, et une partie (22) dite pédale-levier formant avec ladite pince un dièdre, l'arête (25) du dièdre constituant le point d'appui d'un levier dont la pédale, suivant le sens de sa longueur, constitue le grand bras, et la pince, suivant sa largeur, constitue le petit bras.

6.- Dispositif selon la revendication 5, caractérisée :

par une troisième partie, dite pédale de rappel (26) prolongeant sensiblement à angle droit la pédale-levier (22), ladite pédale de rappel ayant une longueur comprise entre le tiers et le quart de la longueur de la pédale-levier.

7.- Dispositif selon la revendication 5, caractérisée :

en ce que l'angle ($\alpha$) de dièdre formé par le plan de la pince et par le plan passant par l'arète et par l'extrémité de la pédale-levier est inférieur d'environ 5 à 10° à l'angle droit.

8.- Dispositif selon la revendication 5, caractérisé :

en ce que les bords de ladite pince sont légèrement arrondis.

9.- Dispositif selon la revendication 5, caractérisé :

en ce que ladite pince comporte, sur son bord destiné à être en contact avec un bord de la face de l'ouvrant, une réduction (27) de largeur.

10.- Rondelle selon la revendication 1, caractérisée :

en ce qu elle est constituée de matière palstique.

1/3　　　　　　　0136211

FIG. 2

FIG.1

FIG.3

FIG.4

FIG.5

0136211

FIG.6

FIG.7

FIG.8

FIG.9

FIG.10a

FIG.10b